# EUROPÄISCHE PATENTSCHRIFT

(11) **EP 1 442 901 B1**
(45) Veröffentlichungstag und Bekanntmachung des Hinweises auf die Patenterteilung: **04.01.2006**
(21) Anmeldenummer: 03028408.7
(22) Anmeldetag: 11.12.2003
(51) Int. Cl.: B60D 1/145, B60D 1/44, B60D 1/46

(54) **Zugdeichselanordnung für Anhänger**
Draw beam arrangement for trailer
ensemble poutre de traction pour remorque

(30) Priorität: 29.01.2003 DE 10303338
(43) Veröffentlichungstag der Anmeldung: 04.08.2004
(73) Patentinhaber: Schmitz Gotha Fahrzeugwerke GmbH, 99867 Gotha (DE)
(72) Erfinder: Gortan, Björn, 99955 Hornsömmern (DE); Koch, Josef, 89081 Ulm (DE)
(74) Vertreter: Weber, Gerhard

(56) Entgegenhaltungen:
- EP-A- 0 800 936
- EP-A- 0 950 551
- WO-A-01/76896
- DE-A- 19 648 450
- DE-A- 19 905 676
- DE-U- 7 320 517
- DE-U- 9 419 710

## Beschreibung

Die Erfindung betrifft eine Zugdeichselanordnung für Anhänger, insbesondere für Anhänger mit Zentralachse oder Tandemachse, sowie einen Zugholm für eine Anhänger-Zugdeichselanordnung.

Verstellbare Zugdeichselanordnungen für Fahrzeuganhänger sind beispielsweise aus der DE3147837C2 oder der DE4301055A1 mit an einer horizontalen Achse schwenkbar gelagerten und in verschiedenen Schwenklagen festgelegten Zugholmen bekannt. Eine Zugdeichsel mit an einer vertikalen Platte und einer fahrgestellseitigen Gegenplatte höhenverstellbarem Zugholm ist aus der FR1461451B bekannt.

Die DE19905676A1 zeigt eine Zugdeichsel für Zentralachsanhänger, bei welchen zwei an Querträgern, welche unten an Längsträger des Fahrgestells angeschweißt sind, befestigte Konsolenpaare in Längsrichtung des Anhängers beabstandet sind und sich paarweise mit vertikalen Flächen gegenüberstehen, in welchen vertikale Lochreihen ausgebildet sind. Der Abstand der gegenüber stehenden Konsolenflächen ist im wesentlichen gleich den Querabmessungen des zwischen den Konsolen gehaltenen Zugholms, dessen Seitenflächen horizontale Lochreihen aufweisen. Mittels durch die Konsolenflächen und durch den Zugholm greifenden Bolzen oder Schrauben ist der Zugholm in seiner Position bezüglich des Fahrgestellrahmens festlegbar, wobei die besondere Konstruktion einen Wechsel der Holmposition in Höhe und in Längsrichtung einfach und mit nur wenigen Handgriffen ermöglichen soll. Bei einer aus der DE 299 11 086 U1 bekannten Zugdeichsel sind Querträger mit dem Deichselholm verschweißt und mit an den Unterseiten der Rahmenlängsträger angeschweißten Lagerböcken verschraubt. Für unterschiedliche Deichselhöhen sind unterschiedlich hohe Lagerböcke vorrätig, welche je nach für den Anhänger gewünschter Deichselhöhe einmal ausgewählt und angeschweißt werden.

Die DE 196 48 450 A1 zeigt einen Anhänger mit einer V-förmigen Zuggabel aus zwei Zugholmen. Die Zugholme bestehen aus C-förmigen Profilen, welche mittels U-förmiger Flansche mit nach außen abgewinkelten Schenkeln am Chassis des Anhängers über Schrauben befestigt werden. Die Flansche greifen hierbei durch Schlitze in den Seitenflächen der Profile hindurch. Durch mehrere in Längsrichtung der Profile beabstandete Schlitze sind dieselben Zugholme für Anhänger verschiedener Größe verwendbar.

Der vorliegenden Erfindung liegt die Aufgabe zugrunde, eine Zugdeichselanordnung für einen Fahrzeuganhänger, insbesondere einen Anhänger mit Zentralachse oder Tandemachse, welche flexibel hinsichtlich der Einstellbarkeit und Austauschbarkeit von Zugdeichseln ist sowie einen vorteilhaften Zugholm für eine Zugdeichselanordnung anzugeben.

Durch die Einfügung von Querträgern als verbindende Elemente von Konsolen und Zugholm sind die Verbindungsstrukturen an Zugholm und an den Konsolen voneinander entkoppelt, so dass die fest mit dem Fahrgestell des Anhängers verbundenen Konsolen einerseits und der austauschbare Zugholm andererseits weitgehend unabhängig voneinander konstruiert und optimiert werden können und die Querträger als auswechselbare Verbindungsglieder mit geringem Aufwand, insbesondere ohne Eingriff in die festen Strukturen von Fahrgestellrahmen und Zugholm eine einfache Anpassung unterschiedlicher Kombinationen von Fahrgestellrahmen und Zugholm erlauben, wobei solche unterschiedlichen Kombinationen nicht nur Variationen innerhalb einer Baureihe umfassen, sondern auch baureihenfremde Module mit einschließen können.

Die Verstellmöglichkeiten sind in der Weise voneinander entkoppelt, dass die Höhenverstellung durch veränderliche lösbare Befestigung der Querträger an den Konsolen und die Längsverstellung durch veränderlich lösbare Befestigung des Zugholms an den Querträgern erfolgt.

Die Konsolen sind vorteilhafterweise an dem Fahrgestellrahmen des Anhängers, insbesondere an dessen seitlich beabstandeten Längsträgern befestigt, vorzugsweise verschweißt und weisen typischerweise einen je nach Breite des Fahrgestells unterschiedlichen seitlichen Abstand voneinander auf, welcher durch in der Länge angepasste Querträger überbrückt wird. Die Verbindung zwischen Konsolen und Querträgern erfolgt vorzugsweise mittels durch Bohrungen in beiden Bauteilen, insbesondere in aneinanderliegenden vertikalen Flächen greifende Schrauben oder Bolzen. Vorzugsweise zeigen die Konsolen vertikale Lochreihen zur höhenunterschiedlichen Positionierung der Querträger. Günstigerweise können die Querträger entlang der Konsolen bis zwischen die Längsträger vertikal nach oben positioniert werden. Hierdurch wird vorteilhafterweise auch eine Hochkupplung an ein Zugfahrzeug mit zwischen dessen Längsträgern angeordneter Kupplung möglich.

Demgegenüber wird die lösbare Verbindung zwischen Querträgern und Zugholm vorteilhafterweise mittels Fügeelementen mit vertikaler Fügerichtung, insbesondere mit unterhalb der Querträger liegendem und von unten gegen diese geschraubtem Zugholm hergestellt. Hierfür sind vorteilhafterweise in den Querträgern in einer horizontalen Trägerebene Lochbilder gegeben, welche mit in Längsrichtung verlaufenden horizontalen Lochreihen am Zugholm im Sinne einer in Längsrichtung in mehreren diskreten Positionen möglichen Befestigung korrespondieren.

Der Zugholm weist seitlich abstehende horizontale Plattenabschnitte auf, in welchen die horizontalen Lochreihen für die Längsverstellung ausgebildet sind. Der Zugholm ist als Schweißkonstruktion ausgeführt mit einem Obergurt, welcher seitlich über Seitenwände des umschlossenen Zugholm-Querschnitts hinaus ragende Plattenabschnitte aufweist. Diese können vorteilhafterweise durch in den Außenwinkeln von Obergurt und Seitenwänden des Zugholms eingeschweißte Verstärkungen, insbesondere z.B. Winkelprofile mit übereinstimmenden Lochreihen verstärkt sein. Die Befestigung des Zugholms über die seitlichen Plattenabschnitte vermeidet eine Schwächung des Holmquerschnitts. Femer kann der Zugholm mit einem innenliegenden teleskopierbaren Zugrohr versehen sein, an welchem die Zugöse der Zugdeichselanordnung angebracht ist.

An den Querträgern können vorteilhafterweise Halteelemente vorgesehen sein, welche bei gelösten Befestigungen zwischen Querträgern und unterhalb von diesen liegendem Zugholm den Zugholm horizontal verschiebbar in geringem vertikalen Abstand von den Querträgern halten. Hierdurch ist eine besonders einfache Längsverstellung des Zugholms möglich. Bei der bevorzugten Ausführung des Zugholms mit den seitlich abstehenden Plattenabschnitten untergreifen die Halteelemente vorteilhafterweise diese Plattenabschnitte von der Seite. Die Halteelemente können mit den Querträgern fest verschweißt oder, insbesondere zur Anpassung an unterschiedliche Zugholmquerschnitte, quer zur Längsrichtung verstellbar sein.

Die Ausführung des Zugholms als Schweißkonstruktion hat gegenüber einer Rohrausführung auch Gewichts- und Kostenvorteile. Insbesondere können die Seitenwände aus Material geringerer Wandstärke ausgeführt sein als Untergurt und/oder Obergurt was insgesamt bei Einhaltung aller Stabilitätsanforderungen zu einer Materialeinsparung und in dessen Folge zu Gewichts- und Kostenreduzierungen führt. Die Teile der Schweißkonstruktion können auf einfache Weise, insbesondere mittels Laserstrahlschneiden aus kostengünstigem und leicht mit hoher Präzision zu bearbeitendem Flachmaterial hergestellt werden. Hierdurch können insbesondere auch vorteilhaft die einzelnen Teile der Schweißkonstruktion als ebene Blechzuschnitte beliebiger Form, einschließlich aller Öffnungen wie z. B. der Lochreihen im Obergurt hergestellt werden.

Besonders vorteilhaft ist eine Form des Zugholms, bei welchem sich Obergurt und Untergurt von dem Befestigungsbereich mit den Lochreihen zu dem die Zugöse tragenden vorderen Holmende hin verjüngen. Vorzugsweise nimmt auch die Höhe des Querschnitts des Zugholms zur Zugöse in ab, wobei vorzugsweise der Obergurt in Längsrichtung durchgehend eben ist und die Höhenverringerung durch Ansteigen des Untergurtes erfolgt. Dies ermöglicht die Realisierung oder Annäherung an eine biegemomentoptimierte, gewichtsarme Gestaltung des Zugholms.

Die Erfindung ist nachfolgend anhand bevorzugter Ausführungsbeispiele unter Bezugnahme auf die Abbildungen noch eingehend veranschaulicht. Dabei zeigt.
- Fig. 1: eine Seitenansicht auf einen Fahrzeuganhänger
- Fig. 2: eine Draufsicht auf Fig. 1
- Fig. 3: eine Ansicht nach A-A von Fig. 1
- Fig. 4: eine bevorzugte Ausführung eines Zugholms in Seitenansicht
- Fig. 5: den Zugholm nach Fig. 4 in Draufsicht
- Fig. 6: einen vergrößerten Querschnitt durch den Zugholm

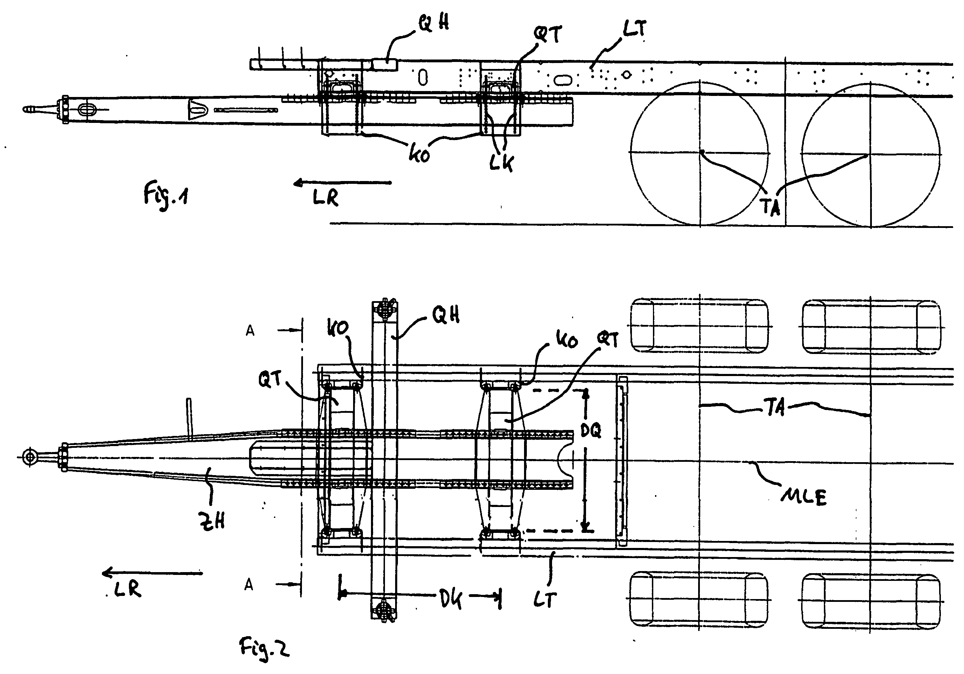

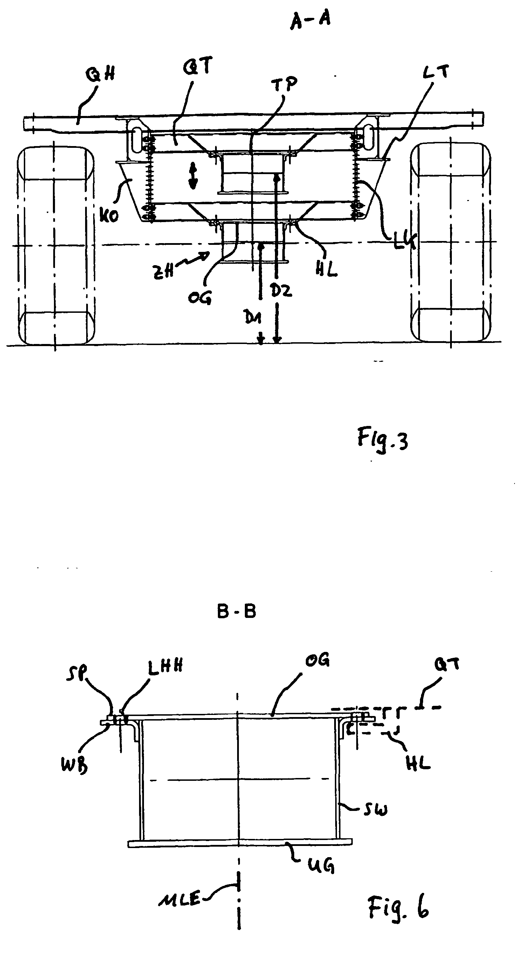

Fig. 1 zeigt in Seitenansicht ausschnittsweise den Fahrgestellrahmen eines Fahrzeuganhängers mit einer mittig liegenden Tandemachse TA. Fig. 2 zeigt eine Draufsicht auf die Anordnung nach Fig. 1, Fig. 3 eine Frontansicht auf die Schnittebene A-A. Der Fahrgestellrahmen enthält insbesondere zwei im wesentlichen in Längsrichtung LR des Fahrzeugs verlaufende Längsträger LT, auf welchen im skizzierten Beispiel Querholme QH abgestützt sind, welche einen Aufbau oder einen Container aufnehmen können. An den Längsträgern LT des Fahrgestellrahmens, welche im skizzierten Beispiel vorteilhafterweise seitlich als offene H-Profile ausgeführt sind, sind Konsolen KO angeschweißt, welche sich von den Längsträgern nach unten erstrecken und insbesondere in der Mittelebene MLE des Fahrgestellrahmens und einander zuweisende vertikal Anlageflächen aufweisen, welche einen gegenseitigen seitlichen Abstand DQ besitzen. Dieser Abstand DQ kann zwischen verschiedenen Varianten von Fahrgestellrahmen variieren. In den vertikalen Anlageflächen der Konsolen KO sind parallele vertikale Lochreihen LK mit einer Mehrzahl vertikal unterschiedlicher Lochpositionen ausgebildet. Die Lochreihen sind vorteilhafterweise als Doppellochreihen mit zwei innerhalb der Anlageflächen der Konsolen in Längsrichtung gegeneinander versetzter Teil-Lochreihen mit untereinander gleichem Muster ausgeführt. Vorderes Konsolenpaar und hinteres Konsolenpaar sind bezüglich der Längsrichtung LR um eine Mittendistanz DK gegeneinander versetzt angeordnet. Die Abstände DQ sind vorzugsweise bei beiden Konsolenpaaren gleich groß.

Der Abstand zwischen gegenüberstehenden vertikalen Flächen eines Konsolenpaares ist bei beiden Konsolenpaaren durch je einen Querträger QT überbrückt. Die Länge der Querträger ist an die Distanz der Anlageflächen der Konsolen angepasst. Die Querträger sind in Richtung quer zur Längsrichtung LR langgestreckt und weisen an ihren entgegengesetzten Enden jeweils Einrichtungen zur Befestigung an den Anlageflächen der Konsolen auf. Diese Befestigungseinrichtungen können insbesondere ein Lochmuster in endständigen Befestigungsplatten enthalten, welches mit den vertikalen Lochreihen der Konsolen in der Weise korrespondiert, dass die Querträger in unterschiedlichen vertikalen Positionen mittels durch das Lochmuster in den Endplatten der Querträger und Bohrungen der Lochreihen LK hindurchgreifende Fügeelemente, insbesondere Schrauben oder Bolzen, mit horizontaler Fügerichtung lösbar verbunden werden können.

Die Querträger können beispielsweise als Hutprofil mit zusätzlich unten angesetzter Tragplatte TP, welche in Längsrichtung LR beidseitig über die Seitenwände des Hutprofils des Querträgers hinausragt und in diesen hinausragenden Teil ein Lochmuster aufweist, welches beispielsweise aus zwei symmetrisch zur Mittellängsebene MLE liegenden Lochpaaren besteht, welche in Längsrichtung LR voneinander beabstandet und zu beiden Seiten der vertikalen Seitenwände des Hutprofils liegen. Die Tragplatten reichen vorteilhafterweise mit abgewinkelten Fahnen in das Innere des Hutprofils der Querträger von unten ein. Die Tragplatte einschließlich der Fahnen ist vorzugsweise mit dem Querträger verschweißt. Die Seitenfahnen des Hutprofils des Querträgers überdecken vorteilhafterweise auch die seitlich überstehenden Abschnitte der Tragplatte. Das Lochmuster in der Tragplatte erstreckt sich durch die Tragplatte und Seitenfahnen des Querträgers. Durch die Doppellage von Tragplatte und Seitenfahnen des Profils wird vorteilhaft mit geringem Materialeinsatz insgesamt eine hohe Festigkeit in dem kritischen Verbindungsbereich von Zugholm und Querträgern erreicht. Anstelle der Doppellage könnten auch eine größere Materialdicke von Tragplatte und/oder Seitenfahnen oder separate Verstärkungselemente vorgesehen sein.

Der Zugholm ZH ist als Schweißkonstruktion mit einem Obergurt OG, einem Untergurt UG und Seitenwänden SW ausgeführt und trägt an seinem in Fahrtrichtung weisenden verjüngten Ende die Zugöse ZÖ, die angeschweißt, angeschraubt oder Teil eines in dem Zugholm teleskopierbar geführten Zugrohres sein kann. Im skizzierten Beispiel ist an dem in Längsrichtung weisenden Ende des Zugholms eine Stirnplatte angeschweißt, an welche die Zugöse angeschraubt wird. Die den Zugholm bildenden, miteinander verschweißten Platten umschließen einen hohlen Querschnitt, über welchen der Obergurt beidseitig seitlich hinausragt. Diese seitlich hinausragenden Plattenabschnitte SP weisen symmetrisch zur Mittellängsebene MLE und in Längsrichtung beabstandet zwei Lochreihen LHV, LHH auf, welchen mit dem Lochmuster in der Tragplatte des Querträgers in der Weise korrespondieren, dass der Zugholm in Längsrichtung in einer Mehrzahl diskreter Positionen von unten an den Querträgern befestigbar ist, indem Fügemittel, insbesondere Schrauben oder Bolzen, mit vertikaler Fügerichtung durch fluchtende Bohrungen der Lochreihen LHV, LHH einerseits und der Lochmuster in den Tragplatten der Querträger andererseits hindurchgreifen und den Zugholm von unten gegen die Tragplatten der Querträger verspannen.

Vorteilhafterweise sind an den Querträgern bzw. deren Tragplatten TP Halteelemente HL angebracht, welche bei gelösten Befestigungselementen zwischen Zugholm und Querträger das Gewicht des Zugholms abfangen und diesen in geringem vertikalen Abstand zu dem Querträger erhalten. In dieser durch die Halteelemente gehaltenen Positionen des Zugholms ist dieser in Längsrichtung verschiebbar und er kann in eine andere Längsposition bzgl. der Querträger gebracht werden. Der Abstand zwischen Zugholm ZH und Querträgern ist dabei so gering, dass in der neuen Längsposition des Zugholms die Fügeelemente wieder durch die Lochmuster der Querträger und die Lochreihen des Zugholms hindurchgesteckt und angezogen werden können. Bei der beschriebenen bevorzugten Ausführungsform des Zugholm als Schweißkonstruktion mit seitlich über den umschlossenen Querschnitt hinausstehenden Plattenabschnitten des Zugholms können diese Plattenabschnitte SP günstigerweise zugleich für die Halterung des Zugholms an den Querträgern bei gelösten Fügeelementen dienen. Hierfür können die Halteelemente in besonders einfacher Ausführung als die Plattenabschnitte SP von der Seite her untergreifende Laschen ausgeführt sein. In Fig. 6 ist in einem vergrößerten Ausschnitt durch eine bevorzugte Ausführung eines Zugholms die relative Lage von Querträger QT mit Halteelementen HL relativ zum Zugholm angedeutet.

In Fig. 3 ist der Querträger QTV in zwei extremen vertikalen Positionen gezeichnet. Die entsprechenden vertikalen Abstände der Mitten des Holmquerschnitts über dem Boden sind mit D1 bzw. D2 bezeichnet. Die Möglichkeit, dass der Querträger bis über die Unterkante der Längsträger LT hinaus nach oben bis zwischen die Querträger positioniert werden kann, ergibt vorteilhafterweise einen besonders großen vertikalen Verstellbereich.

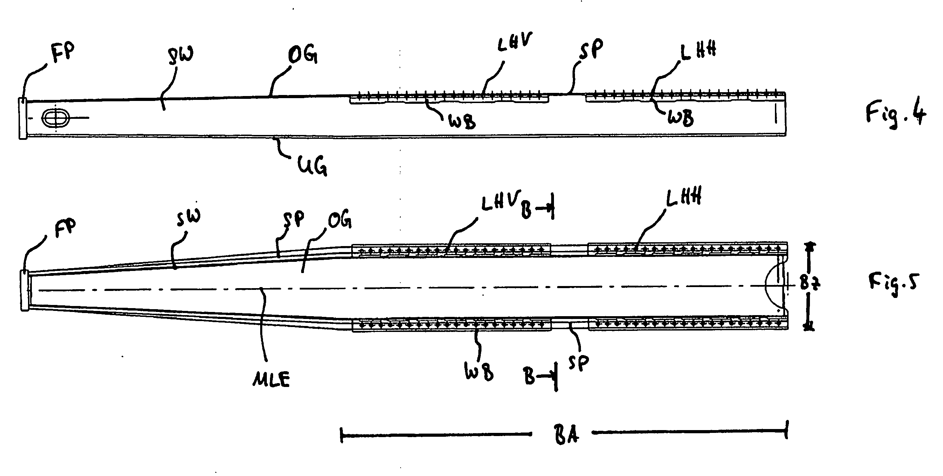

Fig. 4 zeigt eine bevorzugte Ausführung eines Zugholms in Seitenansicht, Fig. 5 in Draufsicht. In Fig. 5 sind dabei verdeckte Linien der Seitenwandplatten und des Untergurts mit sichtbar. In Fig. 6 ist eine Ansicht von vom auf die Schnittebene B-B skizziert. Der Zugholm ist als Schweißkonstruktion aufgebaut und enthält hierbei insbesondere einen Obergurt OG, welcher seitlich über den umschlossenen Querschnitt und insbesondere dessen Seitenwände SW hinaus ragt und insbesondere in einem der Zugöse abgewandten Befestigungsbereich BA, in welchem Vorrichtungen zur Festlegung des Zugholms relativ zum Fahrgestellrahmen eines Anhängers vorgesehen sind, seitlich überstehende Plattenabschnitte SP bildet. Im Befestigungsbereich zeigt der Zugholm eine in Längsrichtung im wesentlichen konstante Breite BZ, wogegen er sich in Längsrichtung LR vor dem Befestigungsbereich bis zur Stimplatte FP verjüngt. Die Seitenwände sind unten vorzugsweise mit einem Untergurt verschweißt. Der Untergurt zeigt gleichfalls seitliche Überstände über die Seitenwandplatten, wobei diese Überstände aber auf das zur Verschweißung zweckmäßige Maß beschränkt sein können und insbesondere nicht die Funktion und Einrichtungen zur Befestigung des Zugholms aufweisen. Die Plattenabschnitte SP am Obergurt des Zugholms weisen in Längsrichtung versetzt jeweils eine vordere Doppel-Lochreihe LHV und eine hintere Doppel-Lochreihe LHH auf, welche in der bereits beschriebenen Weise zur Festlegung des Zugholms in verschiedenen Längspositionen bezüglich des Fahrgestellrahmens dienen. Der seitliche Überstand der Plattenabschnitte SP beträgt hierfür vorteilhafterweise wenigstens das 2-fache des Durchmessers der Löcher in den Lochreihen LHV, LHH. Die überstehenden Plattenabschnitte SP können durch Winkelbleche WB, welche in den Außenwinkel von Obergurt OG und Seitenwänden SW eingesetzt, insbesondere eingeschweißt sind, verstärkt sein. Die Lochreihen LHV, LHH gehen dann durch Obergurt und Winkelbleche WB. Anstelle der Winkelbleche WB könnte, soweit erforderlich oder zweckmäßig, eine Materialverstärkung entlang der Lochreihen auch durch eine größere Dicke des Obergurts, allerdings zu Lasten eines insgesamt höheren Gewichts, oder durch oben aufgesetzte Verstärkungselemente vorgesehen sein.

Die Erfindung ist nicht auf die beschriebenen Ausführungsbeispiele beschränkt, sondern im Rahmen fachmännischen Könnens in mancherlei Weise abwandelbar.

## Patentansprüche

1. Zugdeichselanordnung für Anhänger, insbesondere Zentralachsanhänger mit einem Zugholm (ZH), welcher relativ zum Rahmen (LT) des Anhängers in unterschiedlichen Höhen- und Längspositionen veränderlich festlegbar ist, wobei für die Festlegung des Zugholm bezüglich des Fahrgestellrahmens des Anhängers beidseitig des Zugholms in Längsrichtung beabstandete Konsolen (KO) mit vertikal unterschiedlichen Befestigungspositionen und am Zugholm Einrichtungen zur unterschiedlichen horizontalen Festlegung in Längsrichtung vorgesehen sind, **dadurch gekennzeichnet, dass** zwischen paarweise gegenüberliegenden Konsolen Querträger (QT) höhenverstellbar angeordnet sind und dass der Zugholm in Längsrichtung veränderlich in vertikaler Verbindungsrichtung mit den Querträgern, insbesondere über Fügeelemente verbindbar ist.

2. Anordnung nach Anspruch 1, **dadurch gekennzeichnet, dass** der Zugholm (ZH) im Bereich (BA) der Verbindung mit den Querträgern seitlich abstehende horizontale Plattenabschnitte (SP) mit Befestigungseinrichtungen (LHV, LHH) aufweist.

3. Anordnung nach Anspruch 2, **dadurch gekennzeichnet, dass** der Zugholm als Schweißkonstruktion ausgeführt ist und einen Obergurt (OG) mit seitlich überstehenden Plattenabschnitten (SP) enthält.

4. Anordnung nach Anspruch 3, **dadurch gekennzeichnet, dass** die überstehenden Plattenabschnitte durch Winkelprofile (WB) verstärkt sind.

5. Anordnung nach einem der Ansprüche 2 bis 4, **dadurch gekennzeichnet, dass** die Befestigungseinrichtungen durch in Längsrichtung verlaufende Lochreihen (LHV, LHH) gegeben sind und an den Querträgern (QT) korrespondierende Lochmuster vorgesehen sind.

6. Anordnung nach einem der Ansprüche 1 bis 5, **gekennzeichnet durch** Haltemittel (HL) an den Querträgern (QT), welche den Holm bei gelösten Fügeelementen längsverschiebbar an den Querträgern halten.

7. Anordnung nach Anspruch 6, **dadurch gekennzeichnet, dass** die Haltemittel die horizontal abstehenden Plattenabschnitte (SP) des Zugholms von der Seite untergreifende, an den Querträgern (QT) befestigte Haltelaschen (HL) sind.

8. Anordnung nach einem der Ansprüche 1 bis 7, **dadurch gekennzeichnet, dass** die Konsolen (KO) an Längsträgern (LT) des Anhängerrahmens befestigt sind.

9. Anordnung nach einem der Ansprüche 1 bis 8, **dadurch gekennzeichnet, dass** die Querträger (QT) vertikal bis zwischen seitlich beabstandete Längsträger (LT) des Fahrgestellrahmens des Anhängers verschiebbar sind (Fig. 3).

10. Zugholm für eine Anhänger-Zugdeichselanordnung, welcher einen allseits umschlossenen Querschnitt mit zwei seitlich beabstandeten Seitenflächen und Lochmuster zur längsvariablen Festlegung des Zugholms bezüglich eines Fahrgestellrahmens des Anhängers enthält, **dadurch gekennzeichnet, dass** der Zugholm als Schweißkonstruktion aus zwei Seitenflächen, einem Obergurt und einem Untergurt ausgeführt ist,
dass die Lochmuster in seitlich von den Seitenflächen abstehenden Plattenabschnitten ausgebildet sind, und
dass die abstehenden Plattenabschnitte seitliche Überstände des Obergurts über die Seitenflächen und/oder horizontale Schenkel von an den Seitenflächen angesetzten Winkelblechen (WB) beinhalten.

11. Zugholm nach Anspruch 10, **dadurch gekennzeichnet, dass** der umschlossene Querschnitt im Bereich der Lochmuster im wesentlichen konstant ist und sich zur Zugöse hin horizontal und/oder vertikal verjüngt.

12. Zugholm nach Anspruch 10 oder 11, **dadurch gekennzeichnet, dass** der Obergurt in Längsrichtung gerade durchgehend ausgebildet ist.

## Claims

1. Drawbar arrangement for trailers, in particular centre-axle trailers, having a towbar (ZH) which can be variably fixed in different height and length positions relative to the frame (LT) of the trailer, the towbar being fixed with respect to the chassis frame of the trailer by providing, on both sides of the towbar, brackets (KO) which are spaced apart in the longitudinal direction and have vertically different fastening positions and by providing devices on the towbar to allow different horizontal fixing in the longitudinal direction, **characterized in that** transverse members (QT) are arranged in a height-adjustable manner between pairs of mutually opposite brackets and **in that**, in the longitudinal direction, the towbar can be variably connected in the vertical direction of connection to the transverse members, in particular by means of coupling elements.

2. Arrangement according to Claim 1, **characterized in that**, in the region (BA) of the connection to the transverse members, the towbar (ZH) has laterally protruding horizontal plate sections (SP) with fastening means (LHV, LHH).

3. Arrangement according to Claim 2, **characterized in that** the towbar is designed as a welded construction and comprises an upper flange (OG) with laterally overhanging plate sections (SP).

4. Arrangement according to Claim 3, **characterized in that** the overhanging plate sections are reinforced by angle profiles (WB).

5. Arrangement according to one of Claims 2 to 4, **characterized in that** the fastening means are formed by rows of holes (LHV, LHH) extending in the longitudinal direction and corresponding patterns of holes are provided on the transverse members (QT).

6. Arrangement according to one of Claims 1 to 5, **characterized by** retaining means (HL) on the transverse members (QT) which retain the bar on the transverse members in a longitudinally displaceable manner when the coupling elements are released.

7. Arrangement according to Claim 6, **characterized in that** the retaining means are retaining lugs (HL) which are fastened to the transverse members (QT) and engage below the horizontally protruding plate sections (SP) of the towbar from the side.

8. Arrangement according to one of Claims 1 to 7, **characterized in that** the brackets (KO) are fastened to longitudinal members (LT) of the trailer frame.

9. Arrangement according to one of Claims 1 to 8, **characterized in that** the transverse members (QT) can be displaced vertically until they are between laterally spaced-apart longitudinal members (LT) of the chassis frame (Fig. 3).

10. Towbar for a trailer drawbar arrangement, which comprises a cross section enclosed on all sides with two laterally spaced-apart side faces and patterns of holes for longitudinally variable fixing of the towbar with respect to a chassis frame of the trailer, **characterized in that** the towbar is designed as a welded construction consisting of two side faces, an upper flange and a lower flange, **in that** the patterns of holes are formed in plate sections protruding laterally from the side faces, and **in that** the protruding plate sections comprise lateral overhangs of the upper flange over the side faces and/or horizontal legs of angle sheets (WB) attached to the side faces.

11. Towbar according to Claim 10, **characterized in that** the enclosed cross section is substantially constant in the region of the patterns of holes and tapers horizontally and/or vertically towards the towbar eye.

12. Towbar according to Claim 10 or 11, **characterized in that** the upper flange is designed to be continuously straight in the longitudinal direction.

## Revendications

1. Ensemble de timon d'attelage pour remorques, notamment remorques à train de roues central comprenant un longeron d'attelage (ZH) qui peut être fixé de manière variable par rapport au châssis (LT) de la remorque dans différentes positions en hauteur et en longueur, dans lequel, pour la fixation du longeron d'attelage par rapport au châssis de la remorque, des consoles (KO) espacées de part et d'autre du longeron d'attelage dans la direction longitudinale sont prévues avec des positions de fixation différentes verticalement et sur le longeron d'attelage sont prévus des dispositifs de fixation horizontale différente dans la direction longitudinale, **caractérisé en ce qu'**entre des consoles opposées par paires sont disposés des supports transversaux (QT) réglables en hauteur et **en ce que** le longeron d'attelage peut être connecté dans la direction longitudinale de manière variable aux supports transversaux dans la direction de connexion verticale, notamment par le biais d'éléments d'assemblage.

2. Ensemble selon la revendication 1, **caractérisé en ce que** le longeron d'attelage (ZH) présente, dans la région (BA) de la connexion aux supports transversaux, des sections de plaque horizontales saillant latéralement (SP) avec des dispositifs de fixation (LHV, LHH).

3. Ensemble selon la revendication 2, **caractérisé en ce que** le longeron d'attelage est réalisé sous forme de construction soudée et comprend une membrure supérieure (OG) avec des sections de plaque saillant latéralement (SP).

4. Ensemble selon la revendication 3, **caractérisé en ce que** les sections de plaque saillantes sont renforcées par des profilés coudés (WB).

5. Ensemble selon l'une quelconque des revendications 2 à 4, **caractérisé en ce que** les dispositifs de fixation sont fournis par des rangées de trous (LHV, LHH) s'étendant dans la direction longitudinale, et des motifs de trous correspondants sont prévus sur les supports transversaux (QT).

6. Ensemble selon l'une quelconque des revendications 1 à 5, **caractérisé par** des moyens de retenue (HL) sur les supports transversaux (QT), lesquels retiennent le longeron de manière déplaçable en longueur sur les supports transversaux lorsque les éléments d'assemblage sont détachés.

7. Ensemble selon la revendication 6, **caractérisé en ce que** les moyens de retenue sont des éclisses de retenue (HL) fixées sur les supports transversaux (QT), venant en prise latéralement par le dessous avec les sections de plaque saillant horizontalement (SP) du longeron d'attelage.

8. Ensemble selon l'une quelconque des revendications 1 à 7, **caractérisé en ce que** les consoles (KO) sont fixées sur des supports longitudinaux (LT) du châssis de la remorque.

9. Ensemble selon l'une quelconque des revendications 1 à 8, **caractérisé en ce que** les supports transversaux (QT) peuvent être déplacés verticalement jusqu'à venir entre des supports longitudinaux (LT) espacés latéralement du châssis de la remorque (fig. 3).

10. Longeron d'attelage pour un ensemble de timon d'attelage pour remorques, qui comprend une section transversale entourée de tous les côtés avec deux faces latérales espacées latéralement et un motif de trous pour la fixation variable en longueur du longeron d'attelage par rapport à un châssis de la remorque, **caractérisé en ce que** le longeron d'attelage est réalisé sous forme de construction soudée à partir de deux faces latérales, d'une membrure supérieure et d'une membrure inférieure,
**en ce que** les motifs de trous sont réalisés dans des sections de plaque saillant latéralement depuis les faces latérales, et
**en ce que** les sections de plaque saillantes contiennent des parties saillantes latérales de la membrure supérieure au-dessus des faces latérales et/ou des branches horizontales de tôles coudées (WB) appliquées contre les faces latérales.

11. Longeron d'attelage selon la revendication 10,
**caractérisé en ce que** la section transversale entourée est essentiellement constante dans la région des motifs de trous et se rétrécit horizontalement et/ou verticalement vers l'anneau d'attelage.

12. Longeron d'attelage selon la revendication 10 ou 11, **caractérisé en ce que** la membrure supérieure est réalisée de manière continue et rectiligne dans la direction longitudinale.
